# EUROPÄISCHE PATENTSCHRIFT

(11) **EP 0 816 171 B1**
(45) Veröffentlichungstag und Bekanntmachung des Hinweises auf die Patenterteilung: **20.08.2003**
(21) Anmeldenummer: 97108851.3
(22) Anmeldetag: 03.06.1997
(51) Int. Cl.: B60R 9/04

(54) **Befestigungsanordnung**
Fastening device
Dispositif de fixation

(30) Priorität: 03.07.1996 DE 19626709
(43) Veröffentlichungstag der Anmeldung: 07.01.1998
(73) Patentinhaber: JAC Products Deutschland GmbH, 42285 Wuppertal (DE)
(72) Erfinder: Becker, Herbert, 42399 Wuppertal (DE); Stahlberg, Richardo, 2780 Oeiras (PT)
(74) Vertreter: Rehders, Jochen, Dipl.-Ing.

(56) Entgegenhaltungen:
- DE-A- 4 240 080
- DE-C- 4 422 421

## Beschreibung

Die Erfindung bezieht sich auf eine Befestigungsanordnung einer Mittelstütze am Holm einer Dachreling mit einer einen Kopf und einen Gewindeschaft aufweisenden Schraube und einem eine Gewindeaufnahme aufweisenden Befestigungselement, wobei die Schraube eine Bohrung in der Mittelstütze und eine damit fluchtende Bohrung im Holm durchsetzt, sich mit ihrem Kopf an der Mittelstütze abstützt und mit ihrem Gewindeschaft in die Gewindeaufnahme des innerhalb des Holms angeordneten Befestigungselements eingreift.

Eine Befestigungsanordnung der gattungsgemäßen Art ist durch die DE 42 40 080 C2 bekanntgeworden. In dieser Druckschrift ist beschrieben, wie eine Mittelstütze am Holm einer Dachreling mittels einer Schraube befestigt ist, wobei die Schraube mit ihrem Gewindeschaft in eine mit Innengewinde versehene Bohrung eines innerhalb des Holms angeordneten Befestigungselements eingreift. Das Befestigungselement besteht aus einem Gewindestein, worunter ein plattenförmiger Baukörper mit einer zentralen, ein Innengewinde aufweisenden Bohrung zu verstehen ist. Es hat sich gezeigt, daß die bekannte Befestigungsanordnung noch verbesserungsbedürftig ist. So wird es als nachteilig empfunden, daß die Befestigungselemente mit einer Bohrung und einem darin einzuschneidenden Innengewinde versehen werden müssen, weil diese Arbeitsgänge relativ zeitaufwendig und teuer sind. Des weiteren ist die Plazierung der Befestigungselemente innerhalb der Holme nicht unproblematisch, weil auf eine Sichtkontrolle verzichtet werden muß. In der Praxis hilft man sich mit Lehren und Zentrierstiften, um eine Übereinstimmung zwischen der jeweiligen Holmbohrung und der Gewindeaufnahme des jeweiligen Befestigungselements zu erzielen, was für das Eindrehen der Befestigungsschrauben zwingend erforderlich ist.

Der Erfindung liegt nun ausgehend von einer Befestigungsvorrichtung der eingangs genannten Art, die Aufgabe zugrunde, die aufgezeigten Mängel abzustellen und Vorsorge dafür zu treffen, daß das Befestigungselement besonders einfach und kostengünstig herzustellen und insbesondere auch positionsgenau innerhalb des Holms anzuordnen ist.

Zur Lösung dieser Aufgabe ist erfindungsgemäß vorgesehen, daß das Befestigungselement ein Bauteil mit einem Aufnahmekäfig und einer darin verdrehfest angeordneten Gewindemutter ist, daß innerhalb des Holms ein den Einschiebeweg des Befestigungselements begrenzender Anschlag angeordnet ist und daß der Anschlag aus einem eine Öffnung im Holm durchsetzenden Nocken besteht, der an der Mittelstütze ausgebildet ist.

Das Befestigungselement ist ein überaus einfaches Bauteil, das z. B. im Gußverfahren hergestellt werden kann, wobei es sich anbietet, ein Gußwerkzeug zu benutzen, das auch für die Herstellung der Mittelstütze eingesetzt wird. Als wesentlicher Bestandteil des Befestigungselements ist die Gewindemutter anzusehen, die als genormtes Teil preisgünstig im Handel allgemein erhältlich ist. Das Befestigungselement ist demnach zweiteilig ausgebildet und besteht aus der mit einem Vierkant, Sechskant oder dgl. ausgebildeten Gewindemutter und dem Halterungselement für die Gewindemutter. Die Maßnahme, innerhalb des Holms ein den Einschiebeweg des Befestigungselements begrenzenden Anschlag anzuordnen, bietet den Vorteil einer problemlosen Montage und Positionierung des Halteelements, während die Maßnahme, den Anschlag als Nocken unmittelbar an der Mittelstütze auszubilden, der Vereinfachung und der Kosteneinsparung dient.

Zweckmäßige Ausgestaltungen und Weiterbildungen der Erfindung sind in den Unteransprüchen angegeben.

Ein Ausführungsbeispiel der Erfindung wird nachfolgend anhand der Zeichnungen näher erläutert, und es zeigen:

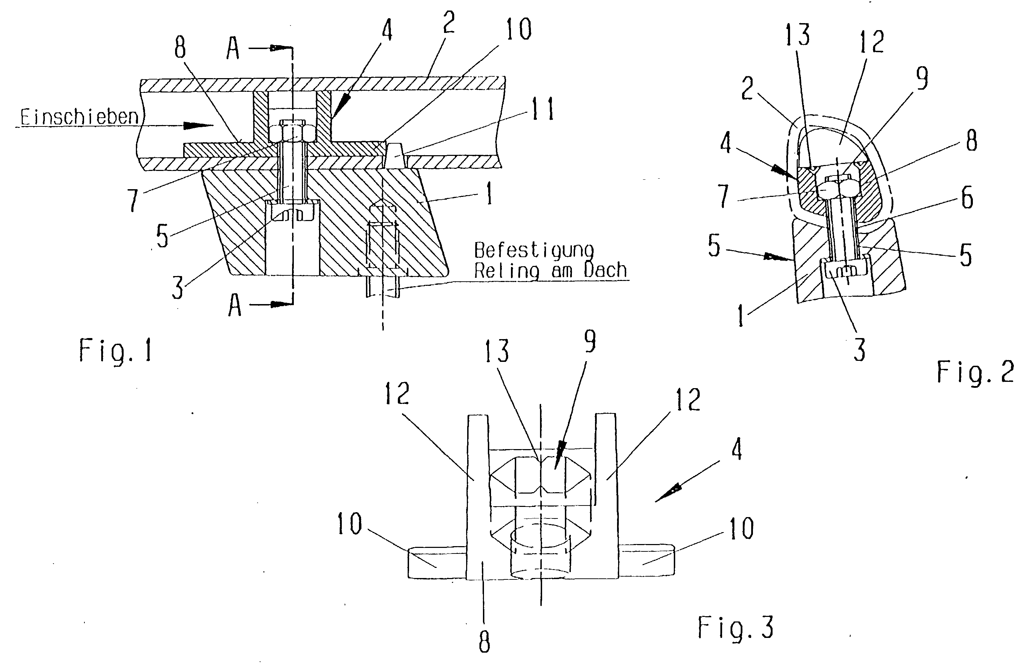

- Fig. 1: einen Vertikalschnitt durch einen Holm mit einer daran befestigten Mittelstütze,
- Fig. 2: einen Schnitt etwa folgend der Linie A - A in Fig. 1 und
- Fig. 3: ein Befestigungselement.

Für die Befestigungsanordnung einer Mittelstütze 1 an einem Holm 2 dient eine Schraube 3 und ein Befestigungselement 4. Die Schraube 3 weist einen sich an der Mittelstütze 1 in versenkter Anordnung abstützenden Kopf und einen Gewindeschaft auf, der eine Bohrung 5 in der Mittelstütze 1 und eine damit fluchtende Bohrung 6 im Holm 2 durchsetzt und in eine Gewindeaufnahme des Befestigungselements 4 eingreift.

Das Befestigungselement 4 ist ein ein Halterungselement für eine Gewindemutter 7 bildendes Bauteil 8 mit einem Aufnahmekäfig 9 für die verdrehfeste Aufnahme der Gewindemutter 7.

Das Befestigungselement 4 wird mittels einer entsprechenden Vorrichtung in den Holm 2, ein Hohlkammerprofil, eingebracht. Ein Verlängerungsarm 10 des Befestigungselements 4 legt sich gegen den in den Holm 2 reichenden Nocken 11 der Mittelstütze 1. Somit kann die Schraube 3 in die im Bauteil 8 befindliche Gewindemutter 7 eingeschraubt werden. Damit ist die Mittelstütze 1 mit dem Holm 2 fest verbunden.

Die Gewindemutter 7 ist als Sicherungsmutter gegen Lösen der Schrauben 3 ausgeführt. Es kann aber auch eine Schraube 3 mit entsprechenden Schraubensicherungsmitteln eingesetzt werden.

Vor dem Einsetzen des Befestigungselements 4 in den Holm 2 wird die Gewindemutter 7 in den dafür ausgelegten Aufnahmekäfig 9 des Befestigungselements 4 eingebracht. Der Aufnahmekäfig 9 kann in den unterschiedlichsten Formen, Sechskant, Vierkant und mit Schlüsselfläche usw. ausgeformt sein. Um ein Hochgleiten der Gewindemutter 7 beim Anschrauben der Mittelstütze 1 zu vermeiden, wird durch einen mechanischen Arbeitsgang nach dem Einlegen der Gewindemutter 7 der Aufnahmekäfig 9 des Bauteils 8, wie bei 13 gezeigt, verstämmt.

Die am Befestigungselement 4 bzw. Bauteil 8 befindlichen Stege 12 verhindern das Hochgleiten des gesamten Befestigungselements 4 sowie das Verkanten des Befestigungselements 4 bei der Montage und dem Einschieben in den Holm 2. Die Stege 12 werden je nach Produkt bzw. Ausführung des Holmprofils der entsprechenden Holminnengeometrie angepaßt. Die Verlängerungsarme 10 sind wie gezeigt zweckmäßigerweise links und rechts vorhanden, um das gleiche Bauteil rechts/links an einer Dachreling verwenden zu können.

Die neue Befestigungsanordnung läßt sich bei Querstäben und Dachträgern nach DIN 75 302 einsetzen.

## Patentansprüche

1. Befestigungsanordnung einer Mittelstütze (1) am Holm (2) einer Dachreling mit einer einen Kopf und einen Gewindeschaft aufweisenden Schraube (3) und einem eine Gewindeaufnahme aufweisenden Befestigungselement (4), wobei die Schraube (3) eine Bohrung (5) in der Mittelstütze (1) und eine damit fluchtende Bohrung (6) im Holm (2) durchsetzt, sich mit ihrem Kopf an der Mittelstütze (1) abstützt und mit ihrem Gewindeschaft in die Gewindeaufnahme des innerhalb des Holms (2) angeordneten Befestigungselements (4) eingreift, **dadurch gekennzeichnet, daß** das Befestigungselement (4) ein Bauteil (8) mit einem Aufnahmekäfig (9) und einer darin verdrehfest angeordneten Gewindemutter (7) ist, daß innerhalb des Holms (2) ein den Einschiebeweg des Befestigungselements (4) begrenzender Anschlag angeordnet ist und daß der Anschlag aus einem eine Öffnung im Holm (2) durchsetzenden Nocken (11) besteht, der an der Mittelstütze (1) ausgebildet ist.

2. Befestigungsanordnung nach Anspruch 1, **dadurch gekennzeichnet, daß** die Gewindemutter (7) im Aufnahmekäfig (9) im wesentlichen auch verschiebefest angeordnet ist.

3. Befestigungsanordnung nach Anspruch 1 oder 2, **dadurch gekennzeichnet, daß** das Befestigungselement (4) dem Öffnungsquerschnitt des Holms (2) angepaßt ist.

4. Befestigungsanordnung nach wenigstens einem der Ansprüche 1 bis 3, **dadurch gekennzeichnet, daß** das Befestigungselement (4) zumindest einendig einen Verlängerungsarm (10) aufweist.

## Claims

1. An arrangement for fastening a central support (1) to the spar (2) of a roof rail, with a screw (3) having a head and a threaded shank and a fastening element (4) having a threaded receptacle, the screw (3) passing through a bore (5) in the central support (1) and a bore (6) flush therewith in the spar (2), being supported by its head on the central support (1) and engaging with its threaded shank in the threaded receptacle of the fastening element (4) located within the spar (2), **characterised in that** the fastening element (4) is a component (8) having a receiving cage (9) and a threaded nut (7) arranged so as not to twist therein, that a stop which limits the insertion path of the fastening element (4) is arranged within the spar (2) and that the stop consists of a pin (11) passing through an opening in the spar (2) which is formed on the central support (1).

2. A fastening arrangement according to Claim 1, **characterised in that** the threaded nut (7) is arranged substantially also so as not to be displaced in the receiving cage (9).

3. A fastening arrangement according to Claim 1 or 2, **characterised in that** the fastening element (4) is adapted to the opening cross-section of the spar (2).

4. A fastening arrangement according to at least one of Claims 1 to 3, **characterised in that** the fastening element (4) has an extension arm (10) at least on one end.

## Revendications

1. Dispositif de fixation d'un appui central (1) sur le longeron (2) d'une galerie de toit comportant une vis (3), présentant une tête et une tige filetée, ainsi qu'un élément de fixation (4) présentant un logement taraudé, la vis (3) traversant un perçage (5) de l'appui central (1) et un perçage (6) aligné avec celui-ci du longeron (2), prenant appui par sa tête contre l'appui central (1) et s'engageant, par sa tige filetée, dans le logement taraudé de l'élément de fixation (4) disposé à l'intérieur du longeron (2), **caractérisé en ce que** l'élément de fixation (4) est un composant (8) avec une cage de réception (9) et un écrou fileté (7) disposé fixe en rotation à l'intérieur, **en ce qu'**à l'intérieur du longeron (2) est disposée une butée limitant la distance d'introduction de l'élément de fixation (4) et **en ce que** la butée est constituée d'une came (11) traversant une ouverture du longeron (2) et réalisée sur l'appui central (1).

2. Dispositif de fixation selon la revendication 1, **caractérisé en ce que** l'écrou fileté (7) est disposé dans la cage de réception (9) essentiellement aussi fixe en translation.

3. Dispositif de fixation selon la revendication 1 ou 2, **caractérisé en ce que** l'élément de fixation (4) est adapté à là section d'ouverture du longeron (2).

4. Dispositif de fixation selon l'une au moins des revendications 1 à 3, **caractérisé en ce que** l'élément de fixation (4) comporte au moins à une extrémité un bras de rallonge (10).
